# EUROPEAN PATENT APPLICATION

(11) **EP 4 803 498 A1**
(43) Date of publication of application: **09.09.2026**
(21) Application number: 25161917.7
(22) Date of filing: 05.03.2025
(51) Int. Cl.: C04B 38/08, B24D 3/14, B24D 3/18, C04B 35/01, C04B 35/111, C04B 35/119, C04B 35/515

(54) **GREEN BODY AND MIXTURE OF PARTICLES**

(71) Applicant: NCM Investments XXV B.V., 3708 JA Zeist (NL)
(72) Inventor: Kirschner, Andrea Veronika, 9500 Villach (AT); Stegmaier, Saskia, A9500 Villach (AT); Tangeman, Jean, St. Paul, MN, 55144-1000 (US); Flaschberger, Walter, 9500 Villach (AT)
(74) Representative: Keil & Schaafhausen Patentanwälte PartGmbB

(57) **Abstract**

A green body for manufacturing a porous abrasive article by sintering is formed by a mixture of particles which comprises an amount of abrasive particles constituting at least 70% of the weight of the mixture, and a plurality of binder particles (1) dispersed between the abrasive particles and constituting at least 5% of the weight of the mixture.

Each binder particle (1) comprises a binder material having a flux temperature of 600°C or higher. The binder material is adapted to be solid at room temperature, to be flowable at the sintering temperature, to wet, at the sintering temperature, two abrasive particles of the amount of abrasive particles, and to form, after sintering, a solid bond binding the two abrasive particles together at room temperature, so that the two abrasive particles and the binder material of the binder particle form a portion of the porous abrasive article.

Before sintering, each binder particle (1) comprises a hollow void (10) surrounded by a void wall (20) formed by a portion of the binder material. The geometric volume of the void (10) is adapted to form, after sintering, a pore in the porous abrasive article.

## Description

The present disclosure relates to green bodies that can be sintered to obtain abrasive articles, to mixtures of particles for forming such green bodies, and to methods of forming such green bodies and methods of forming abrasive articles from these green bodies.

Sintered abrasive particles and abrasive articles including them are useful for abrading, finishing, or grinding a wide variety of materials and surfaces in the manufacturing of goods. Of the wide variety of known abrasive particles, fused abrasive particles (e.g., including fused alumina, heat treated fused alumina, and fused alumina zirconia) and sintered ceramic abrasive particles (including sol-gel-derived sintered ceramic abrasive particles) are widely used in the abrasives art.

Sintered abrasive articles can be obtained by forming a green body comprising a mixture of abrasive particles and various organic or inorganic additives, such as solvents, dispersants (deflocculants), binders, plasticizers, lubricants, or wetting agents, and then sintering the green body in a kiln to produce a strong, vitrified bonded abrasive article.

Useful green bodies are formed, for example, by compressing a mixture of abrasive particles and other particles, such as binder particles and/or filler particles. The mixture is chosen such as to provide, after sintering, an abrasive article that has a desired porosity and a sufficient bonding between the abrasive particles. Other useful green bodies are formed by heating a mixture of abrasive particles and particles having a low melting point, such as phenolic resins, at low temperatures far below a sintering temperature, e.g. at temperatures of between 300 °C and 600 °C.

Traditionally, certain binder particles in the mixture melted during sintering, the molten liquid binder wetted surface portions of abrasive particles and, once solidified after sintering, bonded the abrasive particles together and thereby provided mechanical strength to the abrasive article. To obtain the desired porosity of the article, the mixture contained a filler such as, for example, inorganic hollow particles that maintained their shape during sintering and thereafter. In other scenarios pores were formed by an organic pore-forming agent in the mixture.

To protect the environment and human health it is desired that the use of organic materials in manufacturing sintered abrasive articles be reduced. Also, it is generally desirable to accelerate or simplify manufacturing processes for sintered abrasive articles.

The present disclosure attempts to address these needs. It provides in a first aspect a green body for manufacturing a porous abrasive article by sintering the green body at a sintering temperature, the green body being formed a mixture of particles, the mixture of particles comprising an amount of abrasive particles constituting at least 70% of the weight of the mixture, and a plurality of binder particles dispersed between the abrasive particles and constituting at least 5% of the weight of the mixture, wherein each binder particle of the plurality of binder particles comprises a binder material having a flux temperature of 600°C or higher, wherein the binder material of each binder particle is adapted to be solid at room temperature, to be flowable at the sintering temperature, to wet, at the sintering temperature, two abrasive particles of the amount of abrasive particles, and to form, after sintering, a solid bond binding the two abrasive particles together at room temperature, so that the two abrasive particles and the binder material of the binder particle form a portion of the porous abrasive article, the green body being characterized in that, before sintering, each binder particle of the plurality of binder particles comprises a hollow void surrounded by a void wall formed by a portion of the binder material of the binder particle, wherein a geometric volume of the void is adapted to form, after sintering, a pore in the porous abrasive article.

Each binder particle of the plurality of binder particles comprises a hollow void. In other words, a fraction of the plurality of binder particles is hollow. This fraction is also referred to herein as "hollow binder particles".

The hollow binder particles make the use of a separate pore-forming agent in the green body obsolete, thereby simplifying the manufacturing process and thereby potentially reducing unit cost of the abrasive article.

Traditionally, pore-forming agents often were organic materials that were removed in the heat-up phase of a sintering step, such as naphthalene, which decomposes at temperatures of about 80 °C. Since such organic pore-forming agents are not required in green bodies, mixtures of particles, and processes according to the present disclosure, less organic material is required in the manufacturing of abrasive articles, (for example, a reduction from e.g., currently 5-30 wt.% organics to less than 5 wt.% organics in the intermediate product composition), making these articles and their production more sustainable and environmentally friendly.

A green body according to the present disclosure can be obtained, for example, by mechanically compressing a mixture of particles. If the mixture is compressed into a mold, e.g. by a plunger, the green body will generally adopt the outer shape of the mold.

Alternatively, certain green bodies can be made by applying mild heat far below the sintering temperature to a green body precursor made of the mixture of particles. Where the particle mixture comprises a low-melting material, the mixture may be introduced into a mold, may then be mildly heated (e.g. at temperatures below 200 °C) such that the low-melting material melts and connects particles of the mixture with each other, and is then cooled for the low-melting material to solidify. A green body of weakly connected particles is obtained by removing the mold.

Alternatively, the mixture of particles may be brought into a desired shape by an additive manufacturing process, such as 3D printing of the mixture of particles. The 3D-printed green body precursor may then be mildly heated such that a low-melting material in the mixture melts and wets particles of the mixture with each other and cooled for the low-melting material to solidify. The low-melting material is often selected such that it evaporates at higher temperatures or at the sintering temperature.

A green body according to the present disclosure is the body which can then, after an optional drying step, be sintered to obtain the abrasive article.

"Sintering" refers herein to the well-known process of compacting and forming a solid mass of material by heat without melting it. A sintering process useful in manufacturing a porous abrasive article from a green body as disclosed herein involves sintering the green body at a suitable sintering temperature of about 800 °C or higher (up to about 1500 °C, for example) for a time interval of between five seconds and 48 hours. The porous abrasive article may be manufactured by sintering the green body at a sintering temperature of between 800 °C and 1500 °C. A porous abrasive article manufactured by sintering a green body may be, for example, a bonded abrasive article or a bonded abrasive tool.

The sintering temperature is usually a temperature that is pre-determined by an expert taking into account parameters like, for example, the melting points and/or flux temperatures of the constituents of the green body. When, for example, the green body comprises particles having a low melting point, the expert would predetermine a sintering temperature well above this melting point to ensure that the low-melt particles do melt as desired, and then sinter the green body at the pre-determined, desired sintering temperature.

Besides the primary effect of compacting and forming a solid mass of material by applying heat, a sintering process for green bodies as described herein further causes the binder particles in the green bodies to be flowable at the sintering temperature.

Abrasive particles useful in manufacturing an abrasive article generally have a nominal size of about 3 microns to about 2000 microns. As used herein, the term "nominal" means: of, being, or relating to a designated or theoretical size and/or shape that may vary from the actual. The size of the abrasive particles may be characterized by a size distribution, such as a size distribution specifying a D50 value, and/or a D5 value and/or a D95 value, for example. The nominal size may be an average size.

Porous abrasive articles that can be manufactured from green bodies as described herein typically have sizes in the range from about 3 millimeters (mm) to about 100 millimeters or 1000 mm. A green body for manufacturing such a porous abrasive article is therefore made from mixtures of particles in which the amount of abrasive particles comprises at least 100 abrasive particles.

In the mixture of particles from which the green body is formed, the binder particles in green bodies according to the present disclosure are dispersed between the abrasive particles. Preferably, the binder particles and the abrasive particles are spatially evenly distributed in the mixture. A suitable mixture of particles may comprise the hollow binder particles and additional binder particles, such as solid (non-hollow) binder particles. Another suitable mixture of particles comprises the hollow binder particles and is free of solid binder particles.

Hollow binder particles that are suitable for the green bodies and mixtures of particles described herein can be obtained via known processes, such as via the process described in US 4,081,259 or the process described in US 9,018,139 B2, which uses glass as a starting material and which results in expanded glass granules having expanded cavities. Larger particles of up to 4 mm diameter can be obtained by forming larger agglomerates of the raw granulate and processing these larger agglomerates as described in US 4,081,259 or US 9,018,139 B2. Alumina may alternatively be used as a release agent and parting agent between agglomerates in the firing step.

The weight of the mixture of particles is deemed to be 100%. Where the green body is formed by compressing the particle mixture, it is assumed that an amount of particles constituting a certain percentage of the weight of the mixture before compression constitutes the same percentage of the weight of the green body after compression. A weight percentage of a type of particles determined in a green body according to the present disclosure can thus be considered the same weight percentage of this type of particles determined in a mixture of particles from which the green body was formed by compression.

Each binder particle comprises a binder material. The binder material may be a crystalline material or an amorphous material. Where the binder material is a crystalline material, the binder material has a melting point, i.e. a temperature at which the binder material turns liquid. Where the binder material is an amorphous material, the binder material has a glass transition temperature above which the binder material begins viscous flow. Its flowability increases (and its viscosity decreases) with increasing temperature. As per a common definition, the glass transition temperature may be the temperature at which the dynamic viscosity of the binder material drops below 10¹² Pa.s, measured using common, known techniques.

The binder material in green bodies according to the present disclosure may be a crystalline material or an amorphous material or a mixture of one or more crystalline materials and one or more amorphous materials. The term "flux temperature" is used herein to refer to the melting point or melting temperature (as conventionally defined) of a crystalline binder material and to the glass transition temperature (as conventionally defined) of an amorphous binder material or of a mixed crystalline/amorphous binder material. The flux temperature of the binder material is a temperature at which a viscosity of the binder material is sufficiently low to allow the binder material to flow, i.e. sufficiently low for the binder material to be flowable. Flowing of binder material of a binder particle results in a noticeable change of the original shape of the binder particle within the time frame of an industrial sintering process, i.e. within seconds to hours.

The flux temperature as defined herein is below the sintering temperature, or it is at most at the sintering temperature. This allows the binder material to be flowable at the sintering temperature and to wet abrasive particles in its vicinity at the sintering temperature. In green bodies according to the present disclosure the binder material has a flux temperature of 600 °C or higher, or of 800 °C or higher. In certain embodiments the flux temperature is about 200 Kelvin or less below the sintering temperature.

The binder material of each binder particle is adapted to be solid at room temperature. Recognizing that amorphous materials are considered viscous at all temperatures, the term "solid" in relation to amorphous materials refers herein to the absence of flowability within the time frame of an industrial sintering process, i.e. within seconds to hours. Absence of flowability implies a non-noticeable change of shape within that time frame. At room temperature the binder particles do thus not noticeably change their shape within seconds or hours. The binder material is usually chosen such that the binder particles do not noticeably change their shape within months or years at room temperature.

A binder material as described herein may be considered flowable at the sintering temperature if its dynamic viscosity at the sintering temperature is 20'000 Pa.s or less, measured using common known techniques. A binder material as described herein having a dynamic viscosity at the sintering temperature is 100 Pa.s or less, measured using common known techniques is considered flowable at the sintering temperature. The flux temperature of suitable binder materials is at the sintering temperature or below the sintering temperature. This ensures that the binder material is flowable at the sintering temperature and can change its shape at the sintering temperature within a timeframe of an industrial sintering process such that the binder material of a binder particle can wet two or three or more abrasive particles in the vicinity of the binder particle.

Wetting as used herein refers to a liquid establishing and maintaining a surface contact with a solid surface. Where the binder material in a green body according to the present disclosure wets two (or three or more) abrasive particles, a portion of it flows to contact respective surfaces of two (or three or more) abrasive particles in the mixture of particles.

Due to a certain amount of cohesion within the binder material, the binder material of a binder particle will often remain contiguous after flowing into surface contact with two or three or more abrasive particles at the sintering temperature. While cooling down after sintering, this contiguous binder material will maintain the surface contact, solidify and form, after sintering, a solid bond which binds the two or three or more abrasive particles together at room temperature, so that these abrasive particles and the binder material of the binder particle form a portion of the abrasive article. The entire porous abrasive article is formed by a large number of abrasive particles, each bound to one or two or more adjacent abrasive particles through solidified binder material, where empty spaces remain between the abrasive particles and the volumes filled with binder material (and potentially other particles) to form pores in the porous abrasive article.

The plurality of binder particles comprises a hollow void delimited by a void wall formed by a portion of the binder material, or by the entire binder material, of the binder particle. The void wall surrounds the void in all directions. This is remotely comparable to the geometry of a ping pong ball which has a solid plastic wall surrounding a gas-filled hollow interior on all sides. The void in a binder particle, however, is not necessarily spherical. The void wall may be thicker, relative to the diameter, than the wall of a typical ping pong ball.

The hollow void of a binder particle may contain a gaseous substance or a mixture of gaseous substances.

A shape of the hollow void of a binder particle is not particularly limited. In certain embodiments the hollow void has a spherical shape or an ellipsoid shape.

The void wall is formed by a portion of the binder material of a binder particle. The void wall thus comprises at least a portion of the binder material of a binder particle. The void wall may comprise the entire binder material of a binder particle. The void wall may comprise other components. In certain embodiments the void wall consists of binder material.

In certain embodiments the void wall has a spherical shape or an ellipsoid shape. In certain embodiments the hollow void has a spherical shape, and the void wall has a spherical shape.

The void wall of a binder particle may have a thickness of between about 5 µm and about 200 µm.

The geometric size of the void is adapted to form, after sintering, a pore in the abrasive article. It is believed that a larger void generally results in a larger pore in the abrasive article. For obtaining useful pore sizes of between about 25 microns and about 3000 or even 3500 microns in the abrasive article, void sizes of between about 25 µm and about 3500 µm are deemed suitable. Void size as used herein may be determined by measuring the longest straight linear extension of a void in any direction.

Binder particles of spherical shape are available in even size distributions. The controlled size distribution provides improved control over the composition of the mixture of particles. Spherical binder particles offer an improved mechanical stability against undesired fracture. Also, hollow binder particles of spherical shape are available at reasonable cost, facilitating a more economical manufacturing of green bodies and abrasive articles as described herein. Therefore, in certain embodiments of a green body and in certain embodiments of a mixture of particles according to the present disclosure each binder particle has a spherical shape.

Hollow binder particles having a hollow void of spherical shape are available at reasonable cost, facilitating a more economical manufacturing of green bodies and abrasive articles as described herein. Also, binder particles having a spherical void offer an improved mechanical stability against undesired fracture. Therefore, in certain embodiments of a green body and in certain embodiments of a mixture of particles according to the present disclosure the hollow void has a spherical shape.

The hollow void may be filled with a gas, with air or with another gas mixture. The gas or the gas mixture may help stabilize the binder particle mechanically against undesired mechanical fracture. A suitably chosen gas or gas mixture may also facilitate chemical interaction with other constituents of the mixture of particles during a sintering process. Therefore, in certain embodiments of a green body and in certain embodiments of a mixture of particles according to the present disclosure, at room temperature the hollow void is filled with a gas, with air or with another gas mixture.

The size of the hollow voids of the hollow binder particles affects the size of the pores in the abrasive article after sintering. The amount of binder material in each binder particle affects the properties of the solid bond between two or three or more abrasive particles adjacent to the binder particle, once sintering is completed. Both parameters depend on the size of the binder particles. Size distribution of a large number of binder particles around a D50 value between about 100 µm and about 3500 µm results both in a useful size of the hollow voids and a useful amount of binder material to form a solid bond. Therefore, in certain embodiments of a green body and in certain embodiments of a mixture of particles according to the present disclosure, the plurality of binder particles has a particle size distribution having a D50 of between 100 µm and 3500 µm, as determined using a sieving method. Pluralities of (a large number of) binder particles having particle size distributions of a D50 value between about 200 µm and about 3500 µm yield useful green bodies as well. In particular embodiments, the D50 value of the plurality of binder particles in the mixture of particles is a value between 600 µm and 800 µm.

Sizes of certain binder particles may not be adequately described by a particle size distribution. Sizes of a number of binder particles in which the largest geometric extension of binder particles in any direction is between about 100 µm and about 4000 µm can result both in a useful size of the hollow voids and a useful amount of binder material to form a solid bond after sintering.

Therefore, in certain embodiments of a green body and in certain embodiments of a mixture of particles according to the present disclosure the longest straight linear extension of the binder particles in any direction is between 100 µm and 4000 µm. In certain embodiments of a green body and in certain embodiments of a mixture of particles according to the present disclosure the longest straight linear extension of the binder particles in any direction is between 100 µm and 1400 µm.

The present disclosure also relates to green bodies and particle mixtures in which the respective void walls of two binder particles are formed by respective binder materials having two different chemical compositions. "Different binder material" refers to "binder materials having different chemical compositions". Different binder materials may be advantageous to obtain certain mechanical or chemical properties of the solid bonds in the abrasive article after sintering.

The present disclosure equally relates to green bodies and particle mixtures in which the respective void walls of all binder particles are formed by a binder material having the same chemical composition. The use of a single type of binder particles (i.e. binder particles of a single chemical composition of binder material) facilitates an even distribution of binder particles in the mixture of particles and helps streamline the manufacturing process, as only one type of binder particles needs to be provided. Therefore, in certain embodiments of a green body and in certain embodiments of a mixture of particles according to the present disclosure the void walls of all binder particles of the plurality of binder particles are formed by portions of binder material having identical chemical compositions.

The chemical composition of the binder material is not particularly limited, provided that the binder material has a flux temperature of 600°C or higher, is solid at room temperature, is flowable at the desired sintering temperature, can wet, at the sintering temperature, two or three or more abrasive particles in its vicinity, and can form, after sintering, a solid bond binding two or three or more abrasive particles together at room temperature. Suitable materials are, for example, certain metals, certain glass materials, or certain vitreous bond materials such as vitreous bond materials comprising silica (SiO₂) and/or alumina (Al₂O₃) and/or boron oxide (B₂O₃).

Therefore, in certain embodiments of a green body and in certain embodiments of a mixture of particles according to the present disclosure the binder material comprises a metal or a glass or a vitreous bond material, such as a vitreous bond material comprising silica (SiO₂) and/or alumina (Al₂O₃) and/or boron oxide (B₂O₃).

A mixture of particles suitable for a green body according to the present disclosure may comprise other particles beyond the abrasive particles and the binder particles. These other particles may provide certain functions such as, for example, filling, lubrication, additional pore forming, etc. These functions may improve the performance of the green body made from the mixture of particles, or it may improve the performance of the abrasive article obtained by sintering the green body. More specifically, the mixture of particles may comprise zirconium oxide. Zirconium oxide may act as a filler, for example.

Therefore, in certain embodiments of a green body and in certain embodiments of a mixture of particles according to the present disclosure the mixture of particles further comprises zirconium oxide.

Traditionally, green bodies are provided with a minimum of mechanical stability by compressing a mixture of particles in a mold having the shape of the green body. Green bodies formed in this way are generally somehow fragile because the particles constituting them are connected with each other only weakly. This traditional way of forming a green body by weakly connecting its particles is, however, a cost-effective way of forming suitable green bodies.

Therefore, in certain embodiments of a green body according to the present disclosure a plurality of particles of the mixture of particles are weakly connected with adjacent particles of the mixture of particles, such as by compressing the mixture of particles in a mold.

A geometric volume of a void results in a certain pore size in the abrasive article, and a larger geometric void volume generally results in a larger pore. Certain useful binder particles are spherical and may, for example, have diameters (i.e., outer diameters) of about 750 µm, with their void walls having a thickness of about 32 µm. Their hollow void thus has a geometric volume of about 0.17 cubic millimetres (mm³). Depending on the desired pore size in the abrasive article, geometric void volumes of between 0.05 mm³ and 24 mm³ may be useful.

Therefore, in certain embodiments of a green body and in certain embodiments of a mixture of particles according to the present disclosure, and independent of the shape of the binder particle and of the shape of the void, the geometric volume of the hollow void is between about 0.05 cubic millimeters and about 24 cubic millimeters.

For obtaining useful pore sizes in the abrasive article, void sizes of between about 25 µm and about 3500 µm have been found suitable. Void size as used herein may be determined by measuring the longest straight linear extension of a void in any direction.

The present disclosure provides, in a second aspect, a particle mixture comprising the hollow binder particles described herein. In particular, it provides a mixture of particles for forming a green body for manufacturing a porous abrasive article by sintering the green body at a sintering temperature,
the mixture of particles comprising an amount of abrasive particles constituting at least 70% of the weight of the mixture, and a plurality of binder particles dispersed between the abrasive particles and constituting at least 5% of the weight of the mixture, wherein each binder particle of the plurality of binder particles comprises a binder material having a flux temperature of 600°C or higher, wherein the binder material of each binder particle is adapted to be solid at room temperature, to be flowable at the sintering temperature, to wet, at the sintering temperature, two (or three or more) abrasive particles of the amount of abrasive particles, and to form, after sintering, a solid bond binding the two (or three or more) abrasive particles together at room temperature, so that the two (or three or more) abrasive particles and the binder material of the binder particle form a portion of the porous abrasive article. The mixture of particles is characterized in that, before sintering, each binder particle of the plurality of binder particles comprises a hollow void surrounded by a void wall formed by a portion of the binder material of the binder particle, wherein a size of the void is adapted to form, after sintering, a pore in the porous abrasive article.

A green body according to the present disclosure may be formed by mechanically compressing, using adequate pressure, a mixture of particles as described in the preceding paragraphs in a mold. Mechanical compression under adequate pressure is a known way of forming a green body.

The present disclosure thus also provides a process of forming a green body as described herein, the process comprising compressing a mixture of particles as described herein in a mold.

As an alternative to forming a green body by compression, a green body may be formed from a particle mixture as described in the preceding paragraphs that is mixed with particles having a low melting point, such as, for example, particles comprising phenolic resins, evenly distributed in the particle mixture. A low melting point may be a melting point at temperatures far (e.g. more than 200 Kelvin) below the desired sintering temperature. A low melting point may be a melting point at a temperature of between 400 °C and 600 °C, for example. After bringing the resulting particle mixture into a desired shape, the green body may be formed by heating such a particle mixture comprising such particles having a low melting point to a temperature which is well below the sintering temperature and at or slightly above the melting point of these low-melt particles. The heat will melt the low-melt particles and cause them to weakly connect the particles of the green body with each other. This heating and subsequent cooling to room temperature results in a fragile but solid green body of a defined shape.

The present disclosure thus also provides a process of forming a green body as described herein, the process comprising heating a mixture of particles as described herein and particles having a melting point below the sintering temperature, evenly distributed in the mixture of particles.

A green body may be formed by the particle mixture described above using an additive manufacturing technique, such as 3D printing, for example. As is known, an additive manufacturing process deposits, under computer control, a first layer of a desired object, then deposits a second layer of the object right on the first layer, in contact with the first layer, then deposits a third layer of the object right on the second layer, in contact with the second layer, and so on, until the object is formed. This technique can be used to sequentially deposit a plurality of layers of the particle mixture described herein one over the other to form the green body. The layer structure is generally detectable in the green body.

The additive manufacturing step may need to be complemented by one or more additional steps, such as a mild heating step, to form the green body that can then be sintered at a sintering temperature which is considerably higher than the mild heat applied to a layer-deposited mixture of particles in the shape of the green body.

Hence, in certain embodiments of a green body according to the present disclosure, the green body is formed by a plurality of layers, each layer deposited on top of an adjacent layer such as to be in contact with the adjacent layer, each layer of the plurality of layers comprising a mixture of particles as described above.

In certain embodiments of a green body according to the present disclosure, a green body precursor is formed by a plurality of layers, each layer deposited on top of an adjacent layer such as to be in contact with the adjacent layer, each layer of the plurality of layers comprising a mixture of particles as described above, wherein the green body precursor is converted into a green body according to the present disclosure by exposing the green body precursor to mild heat at temperatures below 200°C. The mild heat may be applied for time periods of between 10 seconds and 180 minutes.

The present disclosure provides, in a third aspect, a process of forming a green body as described above. By depositing a particle mixture comprising the hollow binder particles described herein in an additive manufacturing technique, a green body according to the present disclosure may be obtained in a particular economical way and in a well-controlled manner, as deposition rates, layer thicknesses, and geometries of the green body can be adjusted easily using software.

The present disclosure thus provides a process of forming a green body, the process comprising depositing sequentially, via an additive manufacturing process, such as via a 3D printing process, a plurality of layers on top of each other, each layer of the plurality of layers comprising respective portions of a mixture of particles as described herein, such that the plurality of layers forms the green body or a portion of the green body.

The present disclosure also provides a process of forming a green body precursor, the process comprising depositing sequentially, via an additive manufacturing process, such as via a 3D printing process, a plurality of layers on top of each other, each layer of the plurality of layers comprising respective portions of a mixture of particles as described herein, such that the plurality of layers forms the green body precursor, or a portion of the green body precursor, wherein the green body precursor is adapted to be transformed into a green body as described herein by applying mild heat at temperatures below 200°C to the green body precursor. The mild heat may be applied for time periods of between 10 seconds and 180 minutes. The mild heat may be applied in an oven.

As explained above, a porous abrasive article can be obtained by sintering a green body according to the present disclosure. The disclosure therefore also provides, in a fourth aspect, a method of forming a porous abrasive article, the method comprising sintering a green body as described herein at a sintering temperature. The sintering temperature may be about 800 °C or higher. The sintering temperature is preferably about 850 °C or higher.

Embodiments of green bodies according to the present disclosure will now be described in more detail with reference to the following Figures:
- Fig. 1: Sectional view of a binder particle according to the present disclosure;
- Fig. 2: Sectional view of a portion of a green body according to the present disclosure;
- Fig. 3: Perspective view of green body according to the present disclosure.

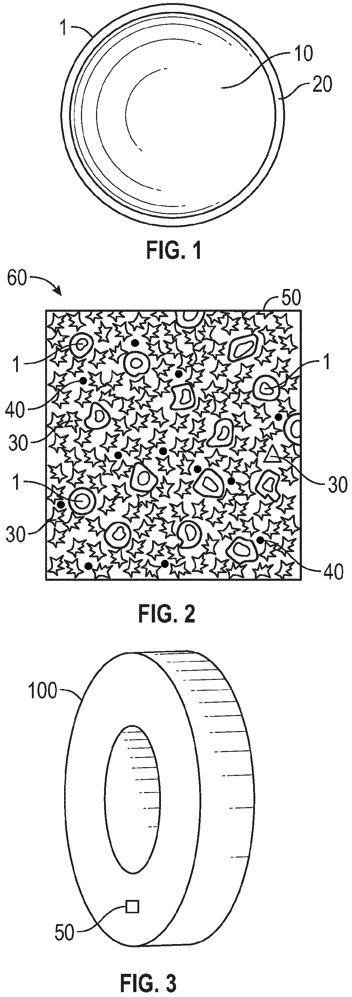

**Figure 1** is a sectional view of a binder particle 1 according to the present disclosure. The binder particle 1 comprises a hollow void 10 delimited by a void wall 20 of spherical shape. The binder particle 1 comprises a binder material comprising a vitreous bond material. The void wall 20 is formed by the binder material. As the binder particle 1 comprises the hollow void 10, it is also referred to herein as a hollow binder particle 1. The binder material has a flux temperature of approximately 600 °C. The hollow binder particle 1 is shown at room temperature (i.e. approximately 25 °C) at which temperature the hollow binder particle 1 is solid.

A large amount (typically millions) of hollow binder particles like the binder particle 1 of Figure 1 is dispersed between a large amount (typically millions) of abrasive particles and optionally other particles to form the mixture of particles.

The hollow void 10 is filled with air. In alternative embodiments it may be filled with another gas or gas mixture. The gas or gas mixture can escape from the green body when the binder material forming the void wall 20 has become flowable and changes its shape such that the previously closed void 10 is opened. In other alternative embodiments the hollow void 10 is filled, partially or completely, with a liquid material, such as a liquid material that evaporates during the heat-up of the green body towards the sintering temperature.

The geometric volume of the void 10 at room temperature ("void volume") is chosen such that a pore of desired size is formed in the abrasive article during and after sintering. For spherical binder particles 1 in which the void is spherical and concentric with the void wall, a selection of a suitable outer diameter of the particle and a selection of a suitable thickness of the void wall 20 determines the void volume. Void volumes can be measured by determining the thickness of the void wall microscopically in fractured binder particles, and by determining a density of binder particles including the voids and of the density of the solid wall material (which is often the binder material) as such. Desired void volumes can easily be found by manufacturing a few abrasive articles from corresponding respective green bodies having hollow binder particles of various void volumes and by assessing if the resulting pore sizes in the resulting abrasive articles are in the desired range. Keeping all other parameters constant, larger void volumes usually result in larger pores in the abrasive article.

In the embodiment shown in Figure 1 the hollow binder particle 1 is of spherical outer shape. In alternative embodiments a hollow binder particle 1 can have a different outer shape, such as, for example, an oval outer shape, or an elliptic outer shape. The amount of hollow binder particles 1 comprised in a mixture of particles forming a green body 100 according to the invention may comprise hollow binder particles 1 of different outer shapes.

In the embodiment shown in Figure 1 the void 10 is of spherical shape. In alternative embodiments a void 10 can have a different shape, such as, for example, an oval shape, or an elliptic shape. Respective hollow binder particles 1 in the amount of binder particles comprised in a mixture of particles forming a green body according to the invention may comprise hollow binder particles 1 comprising voids 10 of respective different shapes.

In the embodiment shown in Figure 1 the void wall 20 consists of binder material. The void wall 20 comprises no other components than binder material. In alternative embodiments, not shown in Figure 1, however, the void wall 20 may comprise binder material and another, second material, and potentially a further material. A second material might be, for example, aluminium oxide.

The binder material forming the void wall 20 of the hollow binder particle 1 of Figure 1 becomes flowable, and its viscosity decreases, as the green body is heated to the desired sintering temperature. This facilitates the binder material of the hollow binder particle 1 to wet, at the sintering temperature, two (or three or more) abrasive particles 30 of the amount of abrasive particles. Wetting creates a surface contact between the binder material of the hollow binder particle 1 and the two (or three or more) abrasive particles 30. This surface contact remains while the green body cools down after sintering. Once cooled down, the binder material of the hollow binder particle 1 forms a solid bond binding the two (or three or more) abrasive particles 30 together at room temperature.

The void wall 20 of the binder particle 1 keeps the abrasive particles 30 apart in the green body before sintering, the void 10 constituting an open space within the unsintered green body. This open space may be reduced in size by the sintering process and may change its shape due to the binder material becoming flowable and the two (or three or more) abrasive particles 30 being urged towards each other by the sintering process. While the solid void wall 20 of the hollow binder particle 1 turns into a volume of flowable binder material of irregular shape at the sintering temperature, the open space in the green body before sintering transforms into an open space, namely a pore, in the abrasive article after sintering. Through this process the presence of the void 10 in a hollow binder particle 1 results in the presence of a pore in the abrasive article.

The two (or three or more) abrasive particles 30 and the binder material of the hollow binder particle 1 then form a portion of the abrasive article obtained by sintering the green body 100. The entire abrasive article is formed from a large number of abrasive particles 30 and a large number of volumes of re-solidified binder material of irregular shape, and potentially other particles 40. After sintering, at room temperature, these volumes of binder material of irregular shape form a solid bond between abrasive particles 30 of the abrasive article. The volumes of binder material originate from the void walls 20 of a large number of binder particles 1 in the mixture 60 of particles from which the green body was formed.

After sintering, at room temperature, re-solidified binder material forms a solid bond binding two or three or more abrasive particles 30 together. "Re-solidified" refers to the binder material being solid at room temperature before sintering, then becoming flowable at its flux temperature, then being flowable at the sintering temperature, and then being solid again at room temperature after sintering.

The size, i.e. the outer diameter, of the hollow binder particle 1 is approximately 750 microns (µm). It was found that hollow binder particles 1, be they spherical or of other outer shape, of sizes of between 25 µm and 4000 µm provide satisfying green bodies 100 and, after sintering, useful porous abrasive articles. In particular, hollow spherical binder particles 1 of diameters of between 100 µm and 1400 µm help provide useful green bodies 100 and, after sintering, useful porous abrasive articles

The thickness, i.e. the radial extension, of the void wall 20 is not particularly limited. For spherical binder particles of 750 µm outer diameter a void wall thickness of between 5 µm and 200 µm has resulted in a useful green body 100 and a useful porous abrasive article.

The binder material is a vitreous bond material "VO 82069", which nominally comprises Na₂O, Al₂O₃, B₂O₃, and SiO₂, and is available from Reimbold & Strick Handels- und Entwicklungs-GmbH, Cologne, Germany.

**Figure 2** is a sectional view of a portion 50 of a green body 100 (see Figure 3) according to the present disclosure. An abrasive article can be manufactured from this green body 100 by sintering the green body 100 and optionally performing certain additional steps. The green body 100 of which Figure 2 shows a portion 50 is formed in traditional, known ways by weakly connecting the particles of a mixture 60 of particles with each other, such as by compressing the particles of the mixture 60 in a mold. The green body thereby adopts the shape of the mold.

Figure 2 illustrates a compressed mixture 60 of particles in a green body 100. While the compression in a mold reduces the geometrical volume of the mixture 60, it does not change the relative weight percentages of the abrasive particles 30 and the hollow binder particles 1 relative to the weight of the mixture 60 of particles.

The portion 50 of the green body 100 shown in Figure 2 comprises a large number of abrasive particles 30, a plurality of hollow binder particles 1 as illustrated in Figure 1 and other particles 40. While the binder particle 1 of Figure 1 has a spherical outer shape and its hollow void 10 has a spherical shape, binder particles 1 in green bodies 100 according to the present disclosure can have many different shapes, as shown in Figure 2, and their respective voids 10 can have many different shapes as well.

Figure 2 shows the portion 50 of an exemplary green body 100. The binder particles 1 have sizes roughly between 100 microns and 1300 microns. The size, the shape, the number and the mixing ratio of the abrasive particles 30 in the portion 50 of the green body shown in Figure 2 may be different when manufacturing abrasive articles from different mixtures 60 of particles. Similarly, and independently from the properties of the abrasive particles 30, the size, the shape, the number and the mixing ratio of the binder particles 1 in the portion 50 of the green body shown in Figure 2 may be different when manufacturing abrasive articles from different mixtures 60 of particles.

Other green bodies 100 according to the invention may be formed in known ways by forming, such as by 3D-printing, a mixture 60 of particles which comprises - in addition to at least abrasive particles 30 and binder particles 1 - a low-melt temporary binder (i.e. a temporary binder melting at low temperatures) to form a green body precursor in a desired shape. The particles of the mixture 60 of particles are then weakly connected with each other by mildly heating the green body precursor. The mild heat melts the low-melt temporary binder, and the molten low-melt temporary binder weakly connects the remaining particles of the mixture 60 with each other once it has cooled down. The low-melt temporary binder is usually selected such that it evaporates at higher temperatures, preferably at higher temperatures which are below the desired sintering temperature. The mild heating causes the green body precursor to become a green body 100 according to the present disclosure. In this green body 100, the particles of the mixture 60 of particles are weakly connected with each other.

The shape of the green body 100 is usually similar to the desired shape of the porous abrasive article manufactured from it, taking into consideration a certain amount of shrinkage of the green body 100 during the sintering step.

**Figure 3** is a perspective view of a green body 100 according to the present disclosure. The green body 100 comprises the portion 50 which, in sectional view, is shown in Figure 2. For clarity, the portion 50 is not drawn to scale in Figure 3. The green body 100 is formed by particles of a mixture 60 of particles which are weakly connected with each other. The weak connection has been obtained by compression of the particle mixture 60 in a mold. The generally annular shape of the green body 100 results from a corresponding annular shape of the mold. An abrasive article of almost identical shape, but slightly smaller due to shrinkage, can be manufactured from the green body 100 by sintering the green body 100 at a sintering temperature of about 900 °C.

After sintering the green body 100, optional further steps may be required to obtain the desired final abrasive article. The sintering, however, converts the fragile green body 100 into an abrasive article which is rigid at room temperature and in which the re-solidified binder material of the binder particles 1 in the particle mixture 60 forms a solid bond between abrasive particles 30, contributing to the rigidity of the abrasive article.

The mixture 60 of particles for forming the green body 100 of Figure 3 comprises a) an amount of abrasive particles 30 constituting about 80% of the weight of the mixture 60, and b) a plurality of binder particles 1 dispersed between the abrasive particles 30 and constituting about 8% of the weight of the mixture 60. The mixture 60 comprises other particles 40 dispersed between the abrasive particles 30 and the binder particles 1 and constituting the remaining weight of the weight of the mixture 60, which is deemed to be 100%. The other particles 40 may be, or may comprise, fillers, lubricants, or bonding agents (such as solid, non-hollow bonding agent particles). The mixture 60 is free of pore forming agents, such as naphthalene, for example, since pores in the porous abrasive article are formed via the hollow binder particles 1 as described above.

## Claims

1. Green body (100) for manufacturing a porous abrasive article by sintering the green body at a sintering temperature, the green body being formed by a mixture (60) of particles, the mixture (60) of particles comprising
- an amount of abrasive particles (30) constituting at least 70% of the weight of the mixture (60), and
- a plurality of binder particles (1) dispersed between the abrasive particles and constituting at least 5% of the weight of the mixture (60);
wherein each binder particle (1) of the plurality of binder particles comprises a binder material having a flux temperature of 600°C or higher,
wherein the binder material of each binder particle (1) is adapted to
- be solid at room temperature,
- be flowable at the sintering temperature,
- wet, at the sintering temperature, two abrasive particles (30) of the amount of abrasive particles,
- form, after sintering, a solid bond binding the two abrasive particles (30) together at room temperature, so that the two abrasive particles (30) and the binder material of the binder particle (1) form a portion of the porous abrasive article,
the green body (100) being **characterized in that**, before sintering, each binder particle (1) of the plurality of binder particles comprises a hollow void (10) surrounded by a void wall (20) formed by a portion of the binder material of the binder particle (1), wherein a geometric volume of the void (10) is adapted to form, after sintering, a pore in the porous abrasive article.

2. Green body (100) according to claim 1, wherein each binder particle (1) has a spherical shape.

3. Green body (100) according to claim 1 or claim 2, wherein the hollow void (10) has a spherical shape.

4. Green body (100) according to any one of the preceding claims, wherein the plurality of binder particles (1) has a particle size distribution having a D50 of between 100 µm and 3500 µm, as determined using a sieving method.

5. Green body (100) according to any one of the preceding claims, wherein the void walls (20) of all binder particles (1) of the plurality of binder particles are formed by portions of binder material having identical chemical compositions.

6. Green body (100) according to any one of the preceding claims, wherein the binder material comprises a metal or a glass or a vitreous bond material, such as a vitreous bond material comprising silica (SiO₂) and/or alumina (Al₂O₃) and/or boron oxide (B₂O₃).

7. Green body (100) according to any one of the preceding claims, wherein the mixture (60) of particles further comprises zirconium oxide.

8. Green body (100) according to any one of the preceding claims, wherein a plurality of particles of the mixture (60) of particles are weakly connected with adjacent particles of the mixture (60) of particles, such as by compressing the mixture of particles in a mold.

9. Green body (100) according to any one of the preceding claims, wherein the longest straight linear extension of the binder particles (1) in any direction is between 100 µm and 4000 µm.

10. Green body (100) according to any one of the preceding claims, wherein the geometric volume of the hollow void (10) is between about 0.05 cubic millimeters and about 24 cubic millimeters.

11. A mixture (60) of particles for forming a green body (100) for manufacturing a porous abrasive article by sintering the green body (100) at a sintering temperature, the mixture (60) of particles comprising
- an amount of abrasive particles (30) constituting at least 70% of the weight of the mixture (60), and
- a plurality of binder particles (1) dispersed between the abrasive particles (30) and constituting at least 5% of the weight of the mixture (60);
wherein each binder particle (1) of the plurality of binder particles comprises a binder material having a flux temperature of 600°C or higher,
wherein the binder material of each binder particle (1) is adapted to
- be solid at room temperature,
- be flowable at the sintering temperature,
- wet, at the sintering temperature, two abrasive particles (30) of the amount of abrasive particles,
- form, after sintering, a solid bond binding the two abrasive particles (30) together at room temperature, so that the two abrasive particles (30) and the binder material of the binder particle (1) form a portion of the porous abrasive article,
the mixture (60) of particles being **characterized in that**, before sintering, each binder particle (1) of the plurality of binder particles comprises a hollow void (10) surrounded by a void wall (20) formed by a portion of the binder material of the binder particle (1), wherein a size of the void (10) is adapted to form, after sintering, a pore in the porous abrasive article.

12. Green body (100) formed by a plurality of layers, each layer deposited on top of an adjacent layer such as to be in contact with the adjacent layer, each layer of the plurality of layers comprising a mixture (60) of particles according to claim 11.

13. Process of forming a green body (100) according to any one of claims 1-10 or claim 12, the process comprising depositing sequentially, via an additive manufacturing process, such as via a 3D printing process, a plurality of layers on top of each other, each layer of the plurality of layers comprising respective portions of a mixture (60) of particles according to claim 11, such that the plurality of layers forms the green body (100) or a portion of the green body (100).

14. Process of forming a green body (100) according to any one of claims 1-10 or claim 12, the process comprising compressing a mixture (60) of particles according to claim 11 in a mold, or comprising heating a mixture of particles according to claim 11 and particles having a melting point below the sintering temperature, evenly distributed in the mixture of particles.

15. Method of forming a porous abrasive article, the method comprising sintering a green body (100) according to any one of claims 1-10 or claim 12 at a sintering temperature.
